(19) Europäisches Patentamt

European Patent Office

Office européen des brevets

(11) **EP 3 273 230 A1**

(12) **EUROPEAN PATENT APPLICATION**

(43) Date of publication:
**24.01.2018 Bulletin 2018/04**

(51) Int Cl.:
**G01N 25/72** (2006.01)          **G01F 1/688** (2006.01)
**G01M 15/14** (2006.01)          **G01M 99/00** (2011.01)

(21) Application number: **17182378.4**

(22) Date of filing: **20.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.07.2016 US 201615215632**

(71) Applicant: **General Electric Company Schenectady, NY 12345 (US)**

(72) Inventors:
• **SRINIVASAN, Dheepa**
  **560066 Bangalore (IN)**
• **BOSCO, Joel John**
  **560066 Bangalore (IN)**
• **MUKHOPADHYAY, Debabrata**
  **560066 Bangalore (IN)**
• **DIMASCIO, Paul Stephen**
  **Greenville, South Carolina 29615 (US)**

(74) Representative: **Foster, Christopher Michael et al General Electric Technology GmbH GE Corporate Intellectual Property Brown Boveri Strasse 7 5400 Baden (CH)**

(54) **INFRARED NON-DESTRUCTIVE EVALUATION OF COOLING HOLES USING EVAPORATIVE MEMBRANE**

(57)    A system (10) and method for thermal inspection of a component (2) having at least one cooling hole (4) is disclosed, that uses an evaporative membrane (14) for direct evaporative cooling of an exhausted working fluid (12). A working fluid (12) is supplied to at least one internal passage (6) of a component (2) that is configured to exhaust the working fluid (12) from the internal passage (6) sequentially through the cooling holes (4) and the wetted evaporative membrane (14) disposed in direct airtight contact with the component (2). An imager (16) captures a time series of images corresponding to a transient evaporative response of the exhausted working fluid (12) to determine a plurality of temperature values for the exhausted working fluid (12) after passage through the evaporative membrane (14). A processor circuit is configured to evaluate the transient evaporative response of the exhausted working fluid (12).

FIG. 1

## Description

FIELD OF THE DISCLOSURE

The disclosure relates generally to thermal inspection systems and methods and more specifically to non-destructive thermal inspection and evaluation of cooled parts using an evaporative membrane for direct evaporative cooling of a working fluid.

BACKGROUND OF THE DISCLOSURE

Hot gas path components, such as turbine airfoils, nozzles, guide vanes, shrouds, combustion components such as combustion liners and transition pieces, and related components, and rotating components including rotors and discs, employ advanced cooling techniques, such as film cooling, as well as advanced coatings, such as thermal barrier coatings (TBCs), in order to withstand their extremely high operating temperatures. Film cooled components are typically inspected manually using weld wire for pin checks involving the use of undersized pin gauges, and by water flow or visible light, which involves flowing water or shining a light through the component and having an operator visually verify that the water is flowing or light is visible from each cooling hole. These manual approaches are qualitative and subject to operator interpretation and uncertainty of detecting holes blocked midway or at an angle.

Infrared (IR) inspection techniques have the potential to perform quantitative, objective inspection of film cooled components. However, IR inspection systems and current airflow check systems typically have conflicting requirements, thereby necessitating the use of separate systems, at considerable expense. Further, existing IR inspection systems are often limited to the inspection of uncoated parts and often fail to provide sufficient IR image resolution because measured working fluid flow temperature differences are insufficient for reliable detection and evaluation.

BRIEF DESCRIPTION OF THE DISCLOSURE

Aspects and advantages of the disclosure will be set forth in part in the following description, or may be obvious from the description, or may be learned through practice of the disclosure.

A system and method for thermal inspection of a component having at least one cooling hole is disclosed, that uses an evaporative membrane for direct evaporative cooling of an exhausted working fluid. A working fluid is supplied to at least one internal passage of a component that is configured to exhaust the working fluid from the internal passage sequentially through the cooling holes and the wetted evaporative membrane disposed in direct air-tight contact with the component. An imager captures a time series of images corresponding to a transient evaporative response of the exhausted working fluid to determine a plurality of temperature values for the exhausted working fluid after passage through the evaporative membrane. A processor circuit is configured to evaluate the transient evaporative response of the exhausted working fluid.

These and other features, aspects and advantages of the present disclosure will become better understood with reference to the following description and appended claims. The accompanying drawings, which are incorporated in and constitute a part of this specification, illustrate embodiments of the disclosure and, together with the description, serve to explain the principles of the disclosure.

BRIEF DESCRIPTION OF THE DRAWINGS

A full and enabling disclosure, including the best mode thereof, directed to one of ordinary skill in the art, is set forth in the specification, which makes reference to the appended figures, in which:

FIG. 1 is a schematic of a thermal inspection system embodiment;
FIG. 2 is a diagram of an inspection system for a gas turbine nozzle component with a single nozzle wrapped with the evaporative membrane;
FIG. 3 is a plot of saturation efficiency (effectiveness) vs. air velocity for various commercial evaporative membrane thicknesses.

Repeat use of reference characters in the present specification and drawings is intended to represent the same or analogous features or elements of the present disclosure.

DETAILED DESCRIPTION OF THE DISCLOSURE

Reference now will be made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

Although an industrial, marine, or land based gas turbine is shown and described herein, the present disclosure as shown and described herein is not limited to a land based and/or industrial, and/or marine gas turbine unless otherwise specified in the claims. For example, the disclosure as described herein may be used in any type of turbine including but not limited to an aero-derivative turbine or marine gas turbine as well as an aero engine turbine.

The principle underlying direct evaporative cooling (DEC) is the conversion of sensible heat to latent heat. Non-saturated working fluid is cooled by heat and mass transfer increases by forcing the movement of the working fluid through a wetted evaporative membrane for evaporation of a membrane fluid. Some of the sensible heat of the working fluid is transferred to the membrane fluid and becomes latent heat by evaporating some of the membrane fluid. The latent heat follows the membrane fluid vapor and diffuses into the air. In DEC, the heat and mass transferred between working fluid and membrane fluid decreases the working fluid dry bulb temperature (DBT) and increases its humidity, keeping the enthalpy constant (adiabatic cooling) in an ideal process. The minimum DBT that can be reached is the wet bulb temperature (WBT) of the incoming working fluid. The effectiveness ($\varepsilon$), sometimes referred to as saturation efficiency, of this system is defined as the rate between the real decrease of the DBT and the maximum theoretical decrease that the DBT could have if the cooling were 100% efficient and the outlet working fluid were saturated:

$$\varepsilon = \frac{DBT1 - DBT2}{DBT1 - WBT1}$$

where: DBT1 = working fluid dry bulb temperature entering
DBT2 = working fluid dry bulb temperature leaving
WBT1 = working fluid wet bulb temperature entering

Factors affecting effectiveness, or saturation efficiency, include the type of membrane, depth of membrane (pad thickness), and face velocity. The face velocity is directly related to working fluid airflow rate through the cooling holes. Thus, measuring the DBT and WBT of the working fluid entering and DBT leaving the evaporative media will yield an effectiveness of the evaporative membrane that can quantify the working fluid velocity, and when multiplied by the free area of the cooling hole(s), the airflow rate is determined.

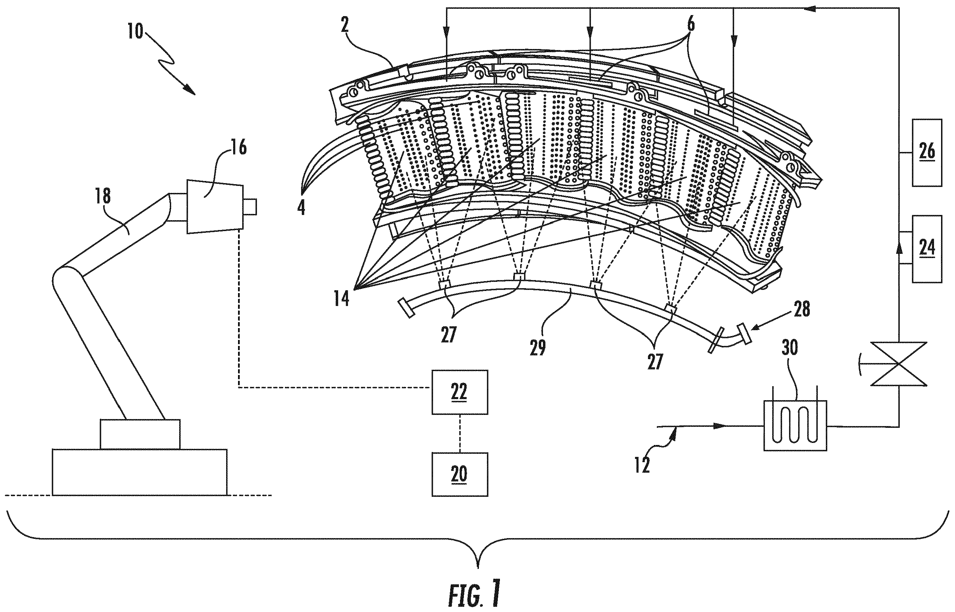

A thermal inspection system for determining DBT2 of a component 2 having at least one cooling hole 4 is described with reference to FIG. 1. As indicated in FIG. 1, the thermal inspection system 10 includes a working fluid source 12 configured to supply a working fluid flow to at least one internal passage 6 of the component 2. As used herein, the term "working fluid" should be understood to encompass liquids and gases. Example fluids include compressed gases, such as compressed air. Other non-limiting examples of the fluid include nitrogen, steam, carbon dioxide and any Newtonian fluid. Example 'components' include equipment used in engine systems such as, but not limited to, turbine engines. Non-limiting examples of components include film cooled components, such as hot gas path components in turbines, for example stationary vanes (nozzles), turbine blade (rotors), combustion liners, other combustion system components, transition pieces, and shrouds. For the example arrangement shown in FIG. 1, the fluid source includes a working fluid 12 source (for example an air compressor) and an evaporative fluid 28 source (for example demineralized water). According to a particular embodiment, the working fluid flow rate remains substantially steady during the time period of usable data, thereby providing a "steady-flow evaporative transient" during this time period.

The system 10 further includes an imager 16 configured to capture a time series of images corresponding to a transient evaporative response of the component 2 as the working fluid 12 passes through the wetted evaporative membrane 14 covering the cooling holes 4 and then exhausts to atmosphere. Evaporative fluid 28 is supplied to a spray header 29 and spray nozzles 27 to provide a means for keeping the evaporative membrane 14 wet during testing and evaluation. An example of a test run can include a series of images captured in succession over a period of time to obtain a evaporative profile of a number of cooling holes 4 on the component 2 as a function of time. The thermal evaporative response corresponds to a number of intensity or temperature values DBT2 for the working fluid exiting the evaporative membrane 14 covering component 2. It should be noted that the thermal response is typically obtained as a set of intensity values for the images. The intensity values can be correlated with temperature values to determine DBT2. Although the operations described herein as described as being performed on temperature values, one skilled in the art will recognize that operations may be carried out with the intensity values. A number of imagers 16 may be employed, including but not limited to, infrared detection devices such as infrared cameras, actuating pyrometers, and single point pyrometers. According to a particular embodiment, the imager comprises an infrared camera. One non-limiting example of an infrared camera is a SEEK IR or a FLIR IR camera suitable for attachment to a mobile phone and the like. However, the invention is not limited to any specific brand of IR camera. Portable or stationary IR cameras may be employed for imaging.

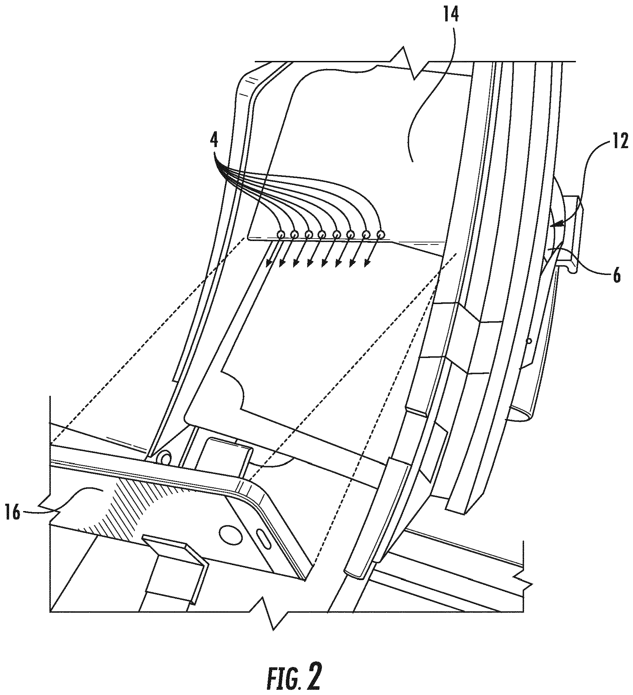

FIG. 2 is a diagram of an embodiment of the inspection system 10 using a gas turbine nozzle component with a single nozzle wrapped with the evaporative membrane 14. A Seek IR imager 16 is positioned to image the cooling holes 4 on the trailing edge of a nozzle component 2. The working fluid 12 enters the nozzle component 2 at the existing cooling air entrance port and passes into the nozzle internal cooling passage for distribution to the cooling holes 4 on the trailing edge of the nozzle before exiting through the cooling holes 4 that are covered air-tight by the evaporative membrane 14. The IR imager 16 then captures a series of images measuring hole specific DBT2 of the working fluid exiting the evaporative membrane 14. These DBT2 measurements are compared to baseline data for a nozzle that meets flow and temperature specifications to determine if and how much cooling hole 4 blockage exists.

The evaporative membrane 14 is "wrapped" around the portion of the component 2 exhibiting cooling holes 4. The membrane 14 is a porous material removably disposed and in direct air-tight contact with the component 2 surface. The membrane 14 can be any porous material that can serve as an evaporative media for direct evaporative cooling of the working fluid exiting the cooling holes 4. Example evaporative membrane 14 materials include tissue paper, muslin cloth, and commercially available rigid cellulose evaporative media such as Galcier-cor, CELdek, or ASPENpad. The membrane 14 is attached air-tight to the component 2 to prevent any leakage of working fluid past the membrane 14 without flowing the working fluid through the membrane 14. The membrane 14 is configured to span at least one cooling hole 4 while positioned essentially perpendicular to the exhaust working fluid flow direction through the cooling holes 4. The evaporative membrane 14 can be 'wetted' with any evaporative fluid 28. As used herein, the term "evaporative fluid" should be understood to encompass liquids that exhibit ability to easily desorb into the working fluid and change the vapor pressure of the working fluid. Example evaporative fluids include water, demineralized water, ether, alcohol, acetone, and general solvents.

In addition, the thermal inspection system 10, as seen in Fig. 1, may further comprise a manipulator 18 configured to control and automate movement of the imager 16 and/or component 2 relative to the other. The manipulator 18 may comprise a robotic arm or other automation means. The thermal inspection system 10 may further include a display monitor 20 coupled to the processor 22 to display the results of the thermal inspection. The thermal inspection system 10 further can include at least one flow meter 24 configured to measure the working fluid flow rate supplied to the component 2 and at least one temperature sensor 26 to measure DBT1 and WBT1 of the working fluid entering the component 2. Depending on the specific implementation, the working fluid may be preheated by heater 30 before entering the component 2.

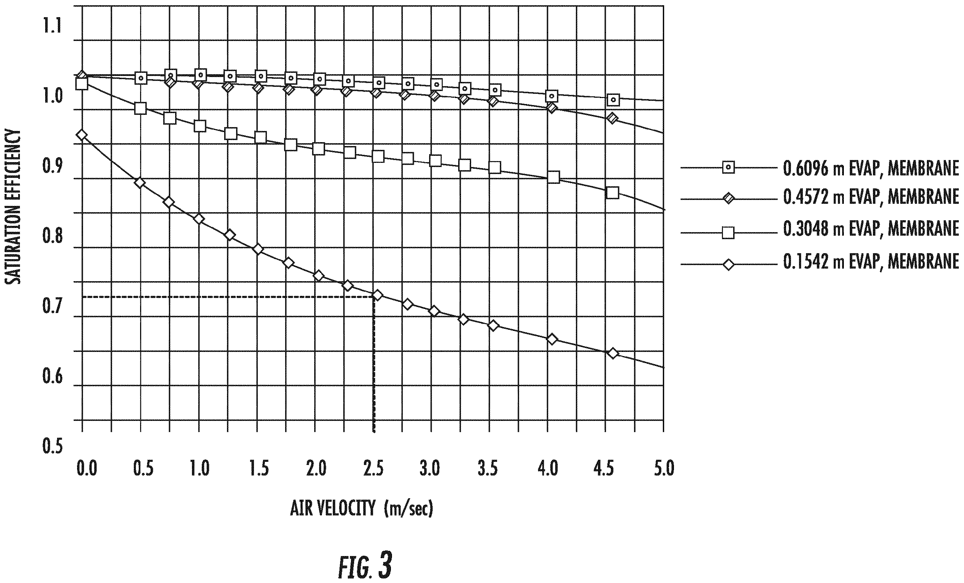

The thermal inspection system 10 further includes a processor 22 operably connected to the imager 16 and configured to determine the transient evaporative response of the component 2 during a test period, wherein the working fluid flow supplied to the component 2 exits the component through cooling holes 4 and an evaporative membrane 14 to lower the DBT of the working fluid as it the exits the component 2. If the cooling hole 4 is partially or completely blocked, any working fluid flow exiting through the cooling hole 4 will not experience the same amount of evaporative cooling and thus will be warmer than working fluid exiting unblocked cooling holes 4 thereby showing a higher DBT2 in the thermal imager 16. Knowing DBT1 and WBT1 as measured by temperature sensor 26, and measuring DBT2 using the thermal imager 16, the air velocity and working fluid flow rate through each cooling hole 4 can be calculated using the effectiveness (saturation efficiency) curve (see Fig. 3) for the specific evaporative membrane being used for evaluation. This can be compared to baseline values for a component 2 with all cooling holes 4 unblocked.

Non-limiting examples of the baseline values include: one or more local values, mean value of a group of local values and a standard deviation of a group of local values. Moreover, "baseline values" can be extracted, for example, using sample (or "nominal") parts that meet the desired specifications. For example, the baseline value may be determined by measuring a baseline transient evaporative response of a sample component known to have properly sized, unblocked cooling passages. Non-limiting examples of the phrase 'meets a desired specification' include: avoiding partial or total blockage from deposits that may build up on an exterior surface of the component resulting in a partial or total blockage of the hole from outside; having the correct film hole size; avoiding an improper formation of the passage such as left over slag from a casting operation, debris from cleaning processes; and avoiding improper dimensions that result in a partial or total blockage of the internal passage 6.

The processor 22 may also be coupled to the camera controller (not shown) and output results obtained on the display monitor 20. The processor is typically capable of capturing an image frame rate of adequate frequency, for example greater than 10 frames per second and typically greater than 15 frames per second, from the imager. The temperature-time history of the component 2 is readily measured by the use of the imager 16 and the processor 22. The temperature-time history of each location on an external surface of the component 2 may be recorded in the processor 22 for analysis. Detailed measurement of the working fluid exit temperature distribution is dependent on the resolution of the imager 16, i.e. the density of a pixel array in the imager 16.

The present disclosure is not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those skilled in the art.

According to particular embodiments, the processor 22 is configured to determine the transient evaporative response by interrogating the intensity or temperature values with respect to time around the test period. Alternatively, frame number can be correlated back to time with the frame rate. The processor 22 is configured to perform the comparison by comparing the intensity or temperature values with the respective baseline value(s) or with the respective acceptable range of values to determine if the component meets the desired specification. Beneficially, normalization eliminates the effect of any day-to-day variation in inlet air temperature DBT1 and varying initial component temperatures. For this embodiment, the processor 22 is further configured to use the normalized data to compute the intensity or temperature values with respect to time.

The processor 22 may be further configured to identify respective locations of the cooling holes 4 on the external surface of the component 2 based on the relative intensities of the pixels in the images. Non-limiting examples of the cooling holes 4 include film-cooling holes. For this embodiment, the subset of the pixels selected corresponds to the locations of the cooling holes 4. According to a particular embodiment, the processor 22 is further configured to identify the location of any of the cooling holes 4 that do not meet the desired specification. For example, the processor 22 may output the row and hole number for the blocked hole for the operator to view on the display 20. Alternatively, the processor 22 may direct a bar code labeler (not shown) to print a bar code that identifies the location of the blocked hole, so that the label (not shown) can be affixed to the component 2. The bar-code label can then be scanned, and the information encoded therein used to repair or rework the component 2.

Beneficially, thermal inspection system 10 may be fully automated and hence faster than current inspections systems, with improved accuracy. Additionally thermal inspection system 10 allows an operator to perform other tasks, thereby increasing production throughput, while optionally creating an archive of all inspected components. Holes that are identified as needing rework can be automatically sent via network communication to the appropriate machine without an operator needing to tell the machine which hole needs to be reworked, thereby saving considerable operator time.

In addition, the thermal inspection system 10 offers potential cost and productivity savings for inspecting gas turbine components for airflow design specifications and open hole inspection. Savings may be realized in the reduction of equipment expenditures and labor costs. Infrared (IR) non-destructive evaluation (NDE) eliminates laborious and manual pin-checking and visual waterflow or lighted inspections. Operators normally spend 5-10 minutes inspecting a single component. With the automation of IR NDE, that time can be reallocated to other production areas. Other benefits of thermal inspection system 10 include the fact that the IR NDE method provides a quantitative measurement to the openness of a hole, whereas the pin-check and water flow operations are qualitative and subject to operator discretion. In addition, the IR NDE readings may be stored electronically, whereas the pin-check and waterflow or lighted typically are not used to create a database to monitor inspection and manufacturing quality. In addition, this method is able to detect partially blocked holes which is impossible via a pin check or a water flow method.

Fig. 3 is a plot of saturation efficiency (effectiveness) vs. air velocity for typical commercial evaporative membrane thicknesses. These plots are available for most commercial evaporative media and membranes. The data is used to calculate the volumetric working fluid flow rate through each cooling hole 4 to determine if any of the cooling holes 4 are fully or partially blocked. For example, using the temperature sensor 26 shown in Fig. 1, DBT1 (working fluid dry bulb temperature entering) is measured at 25 degrees C, and WBT1 (working fluid wet bulb temperature entering) is measured at 10 degrees C. The evaporative membrane 14 thickness covering the component 2 is 0.1542 meters and performs as shown on the bottom curve of Fig. 3. The evaporative membrane 14 remains wetted with the evaporative fluid 28 during the entire test period. Working fluid 12 leaving the cooling holes 4 is evaporatively cooled by the evaporative membrane 14 before being imaged by the IR camera 16. Using IR camera data, DBT2 (working fluid dry bulb temperature leaving) is determined to be evaporatively cooled to 14 degrees C after leaving one of the cooling holes 4. With this data, a saturation efficiency (effectiveness) of 11/15 = 73% is calculated using the equation $\varepsilon = \frac{25C - 14C}{25C - 10C}$. From Fig. 3, the air velocity through the hole for the 0.1542m thick membrane at 73% efficiency is read on the x-axis as 2.5 meters/second. The round cooling hole 4 diameter is known to be 1.588 millimeters thereby defining the cross sectional free area of the cooling hole 4 as $[\pi (1.588)^2/4] = 1.98$ mm$^2$ or 1.98 x 10$^{-6}$ square meters. Multiplying the air velocity of 2.5 m/sec times the cross sectional free area of the cooling hole 4 of 1.98 x 10$^{-6}$ m$^2$ yields a volumetric working fluid flow rate of 5.01 x 10$^{-6}$ cubic meters per second. This volumetric flow rate is compared to a known baseline value and meets or is 'within specification' for an 'unblocked' cooling hole 4 and thus passes inspection. If the volumetric flow rate falls below a threshold value of about 4.0 x 10$^{-6}$ m$^3$/sec, the hole is not within specification and is considered a 'partially blocked' cooling hole 4. If no volumetric flow is measured, the cooling hole 4 is considered 'fully blocked'. The specification has cooling hole 4 condition ranges to determine if the working fluid flow rate falls within conditions selected from the group consisting of fully blocked, partially blocked, and open. The partially and fully blocked cooling holes 4 are identified and marked on the evaluation results before sending the component back for repair. After repair, the component is tested and evaluated until the volumetric working fluid flow rate for the entire component meets specification.

This written description uses examples to disclose the invention, including the best mode, and also to enable any person skilled in the art to practice the invention, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:

1. A thermal inspection system for a component having at least one cooling hole, comprising:

a working fluid source configured to supply a working fluid to at least one internal passage of a component, the internal passage further comprising a plurality of cooling holes configured to exhaust working fluid from the internal passage; an evaporative membrane comprising an evaporative fluid, the membrane removably disposed in direct contact with the component and configured to span at least one cooling hole while positioned essentially perpendicular to an exhausted working fluid flow direction; an imager configured to capture a time series of images corresponding to a transient evaporative response of the exhausted working fluid, wherein the evaporative response corresponds to a plurality of temperature values for the exhausted working fluid after passage through the evaporative membrane; and a processor operably connected to the imager comprising a circuit configured to determine the transient evaporative response of the exhausted working fluid wherein the exhausted working fluid flow is evaporatively cooled where the cooling hole permits sufficient exhausted working fluid flow through the cooling hole to meet a desired specification.

2. The system of clause 1, wherein the working fluid is at least one fluid selected from the group consisting of compressed air, nitrogen, steam, carbon dioxide, and mixtures thereof.

3. The system of clause 1, wherein the evaporative membrane is at least one membrane selected from the group consisting of tissue paper, muslin cloth, rigid cellulose evaporative media, and mixtures thereof.

4. The system of clause 1, wherein the evaporative fluid is at least one fluid selected from the group consisting of water, ether, alcohol, acetone, general solvents, and mixtures thereof.

5. The system of clause 1, wherein each of the images corresponds to a plurality of pixels, wherein the processor is further configured to identify respective locations of the one or more cooling holes on the external surface of the component based on the relative intensities of the pixels in the images.

6. The system of clause 2, wherein the processor is further configured to determine the exhausted working fluid temperature and to compare with the one or more baseline values to determine if a respective cooling hole is at least partially blocked.

7. The system of clause 1, wherein the imager comprises an infrared camera.

8. The system of clause 1, further comprising at least one manipulator for manipulating at least one of a relative position and a relative orientation of the imager and the component.

9. The system of clause 1, wherein the component has more than one cooling hole, and wherein the processor is further configured to identify a location of any cooling holes not meeting the desired specification.

10. A method for determining working fluid flow rate through cooling holes in a component comprising the steps of:

determining the free area and location of each cooling hole in the component, attaching an evaporative membrane to the outer surface of the component such that all cooling holes are covered air-tight, wetting the evaporative membrane continuously with an evaporative fluid, supplying a working fluid to an internal passage of the component, exhausting the working fluid from the internal passage sequentially through the cooling holes and evaporative membrane, calculating a working fluid flow rate through each cooling hole using an evaporative membrane effectiveness, determining if the working fluid flow rate falls within a desired specification.

11. The method of clause 10, wherein the calculating step comprises the additional step of measuring the dry bulb temperature and wet bulb temperature of the working fluid entering the internal passage.

12. The method of clause 11, wherein the calculating step comprises the additional step of measuring the dry bulb temperature of the working fluid leaving the evaporative membrane.

13. The method of clause 10, wherein the desired specification comprises cooling hole condition ranges to determine if the working fluid flow rate falls within conditions selected from the group consisting of fully blocked, partially blocked, and open.

14. The method of clause 10, wherein the working fluid is at least one fluid selected from the group consisting of compressed air, nitrogen, steam, carbon dioxide, and mixtures thereof.

15. The method of clause 10, wherein the evaporative membrane is at least one membrane selected from the group consisting of tissue paper, muslin cloth, rigid cellulose evaporative media, and mixtures thereof.

16. The method of clause 10, wherein the evaporative fluid is at least one fluid selected from the group consisting of water, ether, alcohol, acetone, general solvents, and mixtures thereof.

17. The method of clause 12, wherein the calculating step comprises images with a plurality of pixels and a processor configured to identify respective locations of the one or more cooling holes on the external surface of the component based on the relative intensities of the pixels in the images.

18. The method of clause 17, wherein the processor is further configured to compare one or more baseline values with a measured value to determine if the working fluid flow rate of a respective cooling hole falls within the desired specification range.

19. The method of clause 18, wherein the imager comprises an infrared camera.

20. The method of clause 18, wherein the processor is configured to identify the location of any cooling holes not meeting the desired specification.

**Claims**

1. A thermal inspection system (10) for a component (2) having at least one cooling hole (4), comprising:

a working fluid (12) source configured to supply a working fluid (12) to at least one internal passage (6) of a component (2), the internal passage (6) further comprising a plurality of cooling holes (4) configured to exhaust working fluid (12) from the internal passage (6);
an evaporative membrane (14) comprising an evaporative fluid (28), the membrane (14) removably disposed in direct contact with the component (2) and configured to span at least one cooling hole (4) while positioned essentially perpendicular to an exhausted working fluid (12) flow direction;
an imager (16) configured to capture a time series of images corresponding to a transient evaporative response of the exhausted working fluid (12), wherein the evaporative response corresponds to a plurality of temperature values for the exhausted working fluid (12) after passage through the evaporative membrane (14); and
a processor (22) operably connected to the imager (16) comprising a circuit configured to determine the transient evaporative response of the exhausted working fluid (12) wherein the exhausted working fluid (12) flow is evaporatively cooled where the cooling hole (4) permits sufficient exhausted working fluid (12) flow through the cooling hole (4) to meet a desired specification.

2. The system (10) of claim 1, wherein the working fluid (12) is at least one fluid selected from the group consisting of compressed air, nitrogen, steam, carbon dioxide, and mixtures thereof.

3. The system (10) of claim 1, wherein the evaporative membrane (14) is at least one membrane selected from the group consisting of tissue paper, muslin cloth, rigid cellulose evaporative media, and mixtures thereof.

4. The system (10) of claim 1, wherein the evaporative fluid (28) is at least one fluid selected from the group consisting of water, ether, alcohol, acetone, general solvents, and mixtures thereof.

5. The system (10) of claim 1, wherein each of the images corresponds to a plurality of pixels, wherein the processor (22) is further configured to identify respective locations of the one or more cooling holes (4) on the external surface of the component (2) based on the relative intensities of the pixels in the images.

6. The system (10) of claim 2, wherein the processor (22) is further configured to determine the exhausted working fluid (12) temperature and to compare with the one or more baseline values to determine if a respective cooling hole (4) is at least partially blocked.

7. The system (10) of claim 1, wherein the imager (16) comprises an infrared camera.

8. The system (10) of claim 1, further comprising at least one manipulator (18) for manipulating at least one of a relative position and a relative orientation of the imager (16) and the component (2).

9. A method for determining working fluid (12) flow rate through cooling holes (4) in a component (2) comprising the steps of:

determining the free area and location of each cooling hole (4) in the component (2), attaching an evaporative membrane (14) to the outer surface of the component (2) such that all cooling holes (4) are covered air-tight, wetting the evaporative membrane (14) continuously with an evaporative fluid (28), supplying a working fluid (12) to an internal passage (6) of the component (2), exhausting the working fluid (12) from the internal passage (6) sequentially through the cooling holes (4) and evaporative membrane (14), calculating a working fluid (12) flow rate through each cooling hole (4) using an evaporative membrane (14) effectiveness, determining if the working fluid (12) flow rate falls within a desired specification.

10. The method of claim 10, wherein the calculating step comprises the additional step of measuring the dry bulb temperature and wet bulb temperature of the working fluid (12) entering the internal passage (6).

11. The method of claim 10, wherein the calculating step comprises the additional step of measuring the dry bulb temperature and wet bulb temperature of the working fluid (12) entering the internal passage (6) and leaving the evaporative membrane (14).

12. The method of claim 10, wherein the desired specification comprises cooling hole (4) condition ranges to determine if the working fluid (12) flow rate falls within conditions selected from the group consisting of fully blocked, partially blocked, and open and wherein the working fluid (12) is at least one fluid selected from the group consisting of compressed air, nitrogen, steam, carbon dioxide, and mixtures thereof.

13. The method of claim 10, wherein the evaporative membrane (14) is at least one membrane selected from the group consisting of tissue paper, muslin cloth, rigid cellulose evaporative media, and mixtures thereof and wherein the evaporative fluid (28) is at least one fluid selected from the group consisting of water, ether, alcohol, acetone, general solvents, and mixtures thereof.

14. The method of claim 12, wherein the calculating step comprises images with a plurality of pixels and a processor (22) configured to identify respective locations of the one or more cooling holes (4) on the external surface of the component (2) based on the relative intensities of the pixels in the images and wherein the imager (16) comprises an infrared camera.

15. The method of claim 17, wherein the processor (22) is further configured to compare one or more baseline values with a measured value to determine if the working fluid (12) flow rate of a respective cooling hole (4) falls within the desired specification range and wherein the processor (22) is configured to identify the location of any cooling holes (4) not meeting the desired specification.

FIG. 1

FIG. 2

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/125423 A1 (ALLEN JASON RANDOLPH [US] ET AL) 26 May 2011 (2011-05-26) * paragraphs [0016] - [0048]; figures 1-5 * ----- | 1-15 | INV. G01N25/72 G01F1/688 G01M15/14 G01M99/00 |
| A | US 2009/297336 A1 (ALLEN JASON RANDOLPH [US] ET AL) 3 December 2009 (2009-12-03) * paragraphs [0021] - [0044]; figures 1-11 * ----- | 1-15 | |
| A | CHENGUANG SHENG ET AL: "Empirical correlation of cooling efficiency and transport phenomena of direct evaporative cooler", APPLIED THERMAL ENGINEERING, vol. 40, 30 January 2012 (2012-01-30), pages 48-55, XP055412259, GB ISSN: 1359-4311, DOI: 10.1016/j.applthermaleng.2012.01.052 * section 4.2. * ----- | 1-15 | |

TECHNICAL FIELDS
SEARCHED      (IPC)

G01N
G01F
G01M

The present search report has been drawn up for all claims

| Place of search | Date of completion of the search | Examiner |
|---|---|---|
| The Hague | 10 October 2017 | Zwerger, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 2378

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2017

| Patent document cited in search report | Publication date | Patent family member(s) | | Publication date |
|---|---|---|---|---|
| US 2011125423 A1 | 26-05-2011 | CA | 2720603 A1 | 25-05-2011 |
| | | EP | 2339333 A1 | 29-06-2011 |
| | | JP | 5715387 B2 | 07-05-2015 |
| | | JP | 2011112649 A | 09-06-2011 |
| | | US | 2011125423 A1 | 26-05-2011 |
| US 2009297336 A1 | 03-12-2009 | NONE | | |

EPO FORM P0459

For more details about this annex : see Official Journal of the European Patent Office, No. 12/82